# EUROPEAN PATENT SPECIFICATION

(11) **EP 1 054 492 B1**
(45) Date of publication and mention of the grant of the patent: **29.11.2006**
(21) Application number: 00201736.6
(22) Date of filing: 16.05.2000
(51) Int. Cl.: H02B 1/01

(54) **Metal cabinet framework for electrical equipment and the like**
Rahmengestell für einen Schaltschrank
Bâti métallique pour une armoire électrique

(30) Priority: 18.05.1999 IT MI991089
(43) Date of publication of application: 22.11.2000
(73) Proprietor: BTICINO S.p.A., 20154 Milano (IT)
(72) Inventor: Rigamonti, Enzo, 23895 Nibionno, (Lecco) (IT)
(74) Representative: Faraggiana, Vittorio

(56) References cited:
- EP-A- 0 872 930
- DE-C- 4 135 893

## Description

The present invention relates to a framework for the construction of metal cabinets for electrical equipment and the like.

In the making of frameworks of this type one problem is the steady and strong mutual connection of the various section members. In the prior art various systems have been proposed including shaped joints in which the ends of the section members engage. The connection between the joint and the section member however always requires a plurality of screws and/or welding to ensure the required structural rigidity. This involves relatively high costs and assembly problems.

A framework of this kind is described in EP-A-0 872 930.

The general purpose of the present invention is to remedy the above mentioned shortcomings by making available a framework and members for making it which would provide a rigid structure even with a single locking screw between the section member and associated joint.

In view of this purpose it was sought to provide in accordance with the present invention a framework for metal cabinets and particularly for containing electrical equipment and consisting of closed box section elements connected by connecting joints having engagement projections in the respective section member ends and characterized in that the section members have a cross section with two arms arranged at right angles to each other and a central part for connection between the two arms which is inclined with respect to the arms and has opposing virtually parallel walls and that the joint projections have a cross section virtually complementary to the internal cross section of the section member to be accommodated therein with minimal play and that the projection and the section member have holes aligned with an axis perpendicular to the above mentioned opposed walls of the section member for passage of a mutually locking screw with the locking screw passing through a wall to screw into a threaded member constrained to the opposite wall to grip the engagement projection between the above mentioned two walls.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic exploded perspective view of a framework in accordance with the present invention,
FIG 2 shows an exploded view of a corner joint,
FIG 3 shows a view like that of FIG 2 but from the opposite direction,

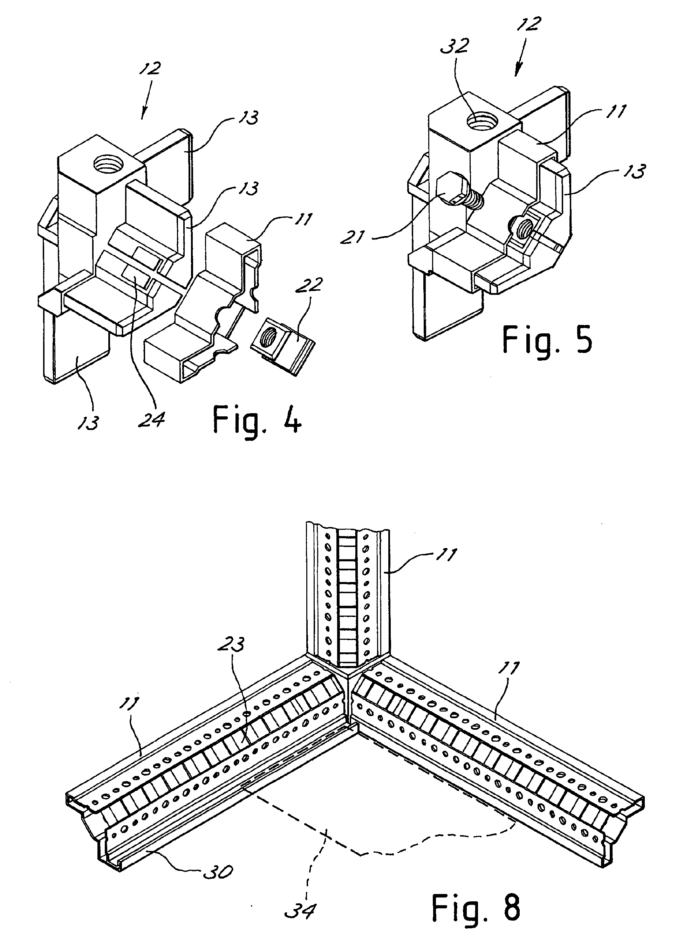

FIGS 4 and 5 show two joint assembly steps,
FIG 6 shows a cross section of a joint zone,
FIG 7 shows a view of a corner zone of the assembled framework, and
FIG 8 shows a view of a possible variant of the framework. With reference to the FIGS FIG 1 shows a framework indicated as a whole by reference number 10 designed to form a metal cabinet or the like and in particular for containing electrical equipment. The framework includes closed box section members 11 connected together by connection joints 12. As may be seen in FIGS 2 to 5 the joints 12 have projections 13 for engagement in the respective ends of the section members 11.

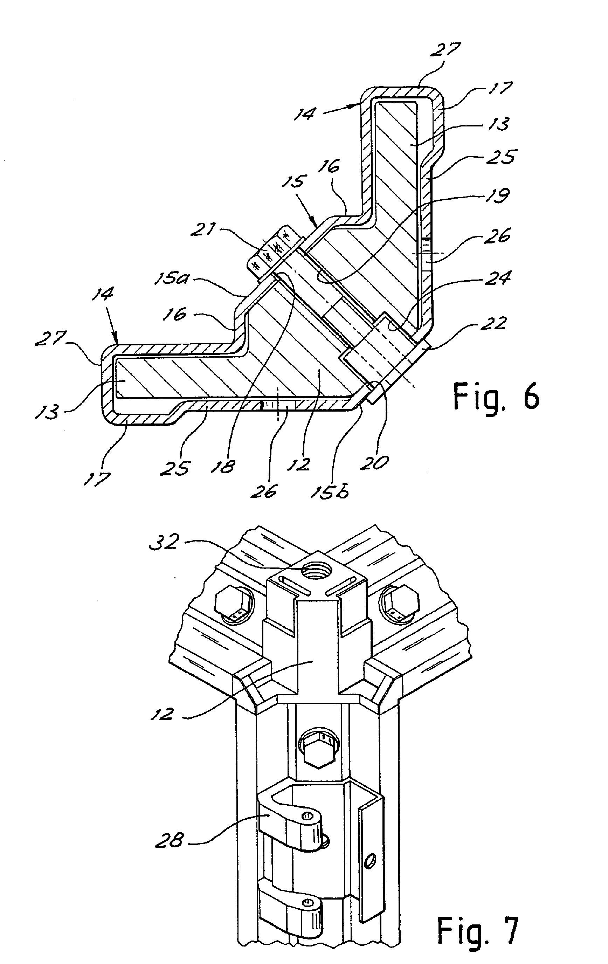

As may be seen in particular in FIG 6 the section members 11 have a cross section with two arms 14 arranged at right angles to each other and a central part 15 for connection between the two arms which is advantageously inclined 45° to give the cross section symmetry with respect to the arms and which has virtually parallel opposed walls 15a, 15b. Advantageously the wall 15a turned towards the conslot formed by the two arms is jointed on both sides to arms through wall segments 16 arranged perpendicular to the extension of said arms. Again advantageously each arm has its end part 17 enlarging towards the exterior of the section. In addition each arm ends with a flat wall 27 arranged transversely to the extension of said arm.

As may be seen again in FIG 6 the joint projections 13 have a cross section virtually complementary to the internal section of the section member so as to be accommodated therein with little play. The projection 13 and the section member 11 have holes 18, 19, 20 aligned along an axis perpendicular to the walls 15a, 15b to allow passage of a screw 21 for mutual locking. The locking screw 21 passes through one of the two walls to screw into a threaded member 22 constrained to the opposite wall.

Thanks to the form of the section the engagement projection is clamped between the two walls 15a and 15b as the screw is tightened.

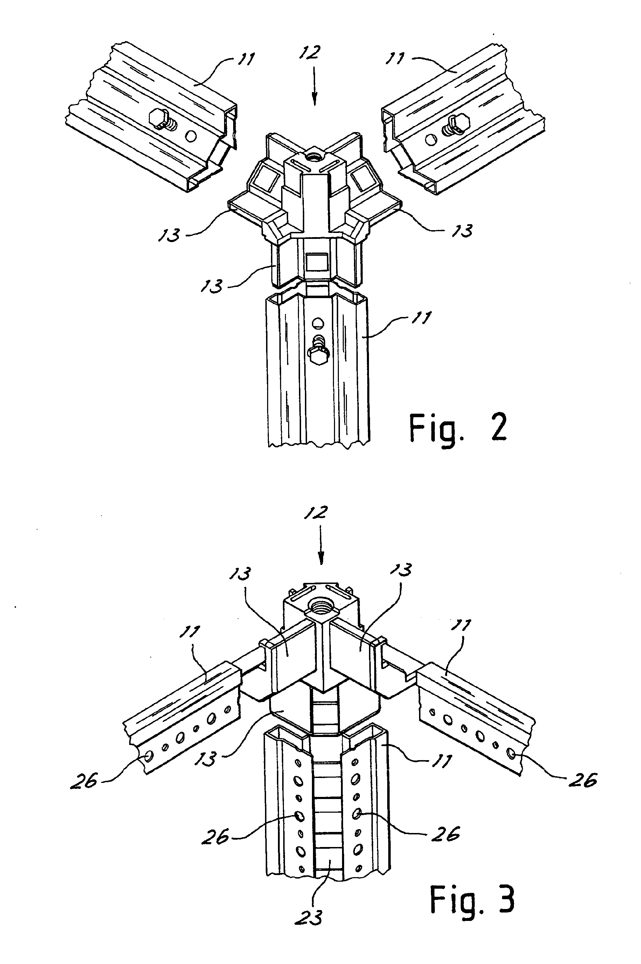

As may be seen in FIG 3 the wall 15b is turned towards the convexity formed by the two arms and has a plurality of windows 23 aligned along the extension of the section member which, in addition to allowing fastening of any members inside the cabinet, provide a seat for the threaded member 22 which is advantageously made in the form of a nog inserted with pressure into a window 23 from outside the section member to project into a corresponding slot 24 in the engagement projection of the corresponding joint. The nog has a widened head which remains outside the section. This way, already upon mere insertion in place the nog constitutes the first stop member of the frame to facilitate insertion of the screw and completion of the assembly.

Again to allow assembly of members inside the cabinet the two arms have a wall 25 turned towards the convexity formed by the two arms and having a plurality of holes 26 aligned along the extension of the section member.

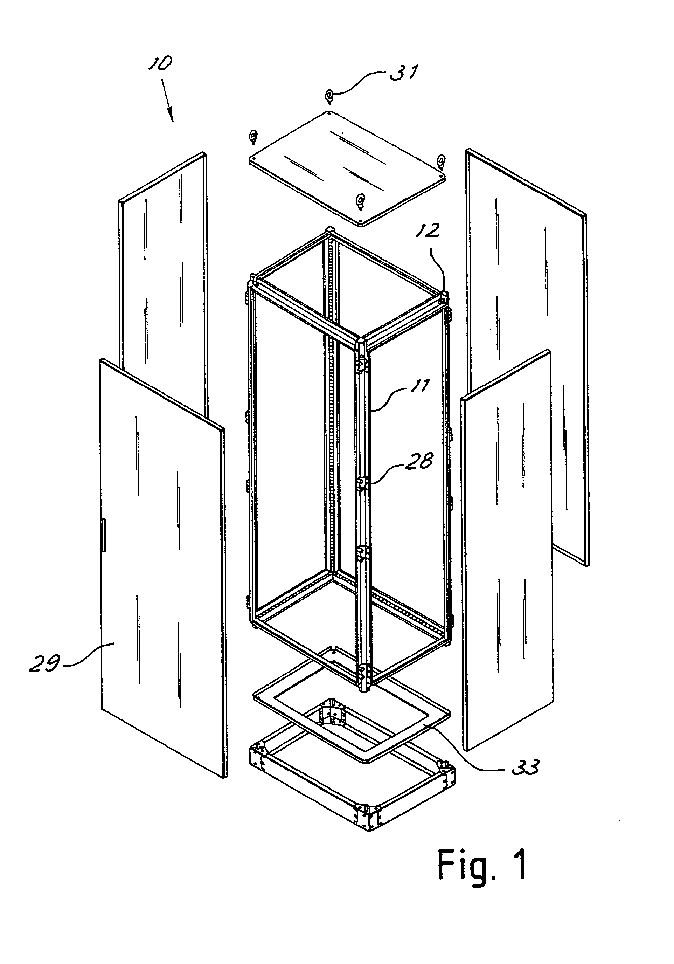

As may be seen in the FIGS each section member has a conslot defined by the two arms and directed towards the exterior of the framework. In addition each arm is arranged with its extension perpendicular to the nearest face defined by the framework. As may be seen in FIG 1 and better yet in FIG 7 the conslot of the sections forming the risers can be used to accommodate accessories such as e.g. hinges 28 for doors or movable cabinet panels 29.

As shown in FIG 8 at least section members arranged at the base of the framework can advantageously have their arms perpendicular to said base and including at their ends projections 30 parallel to said base and identifying a support surface for bottom panels 34.

The section members thus shaped can be e.g. two base members on opposite sides of the framework. To provide safe support and if necessary a striker for gaskets the projections 30 from the arms have their ends bent upward in the shape of the letter L.

As an alternative, in place of the projections 30 the base can be supplied with an inserted frame 33 (FIG 1).

It is now clear that the predetermined purposes have been achieved. The frame structure described has proved to have more than satisfactory stiffness although using a single fastening screw for each end of the section members. This eliminates complicated assembly procedures and/or the need to perform welding of the members once assembled. A similar structure proved e.g. sufficiently strong to be hoistable by suspending it on hooks 31 screwed into the holes 32 in the joints without suffering unacceptable deformation.

Naturally the above description of an embodiment applying the innovative principles of the present invention is given by way of non-limiting example of said principles within the scope of the exclusive right claimed here. For example the proportions of the parts, the exact form of the framework and the number and type of panels and accessories can change depending on specific requirements.

## Claims

1. A framework (10) for metal cabinets particularly for containing electrical equipment comprising closed box section elements (11) connected by connecting joints (12) having engagement projections (13) in the respective section member ends the section members having a cross section with two arms (14) arranged at right angles to each other and a central part (15) for connection between the two arms which is inclined with respect to the arms and has opposing virtually parallel walls (15a,15b) the joint projections (13) having a cross section virtually complementary to the internal cross section of the section member to be accommodated therein with minimal play **characterized in that** the projection and the section member have holes (18,19,20) aligned with an axis perpendicular to said opposed walls of the section member for passage of a mutually locking screw (21) with the locking screw passing through a wall to screw into a threaded member (22) constrained to the opposite wall to grip the engagement projection between the above mentioned two walls.

2. Framework in accordance with claim 1 **characterized in that** the wall (15a) of the two opposed walls which is turned towards the conslot formed by the two arms is jointed on both sides to arms through wall segments (16) arranged perpendicular to the extension of said arms.

3. Framework in accordance with claim 1 **characterized in that** said two opposed walls are inclined 45° to the arm extensions.

4. Framework in accordance with claim 1 **characterized in that** each arm has its end part (17) enlarged towards the outside of the section.

5. Framework in accordance with claim 1 **characterized in that** the wall (15b) of the two opposed walls which is turned towards the convexity formed by the two arms has a plurality of windows (23) aligned along the section member extension.

6. Framework in accordance with claim 1 **characterized in that** the two arms have a wall (25) turned towards the convexity formed by the two arms and having a plurality of holes (26) aligned along the section member extension.

7. Framework in accordance with claim 5 **characterized in that** one of said windows (23) provides a seat for said threaded member (22) for the locking screw with the threaded member being provided as a nog inserted by pressure into said window from the outside of the section member to project into the interior of a corresponding slot (24) in the engagement projection of the corresponding joint.

8. Framework in accordance with claim 1 **characterized in that** each section member has a conslot defined by the two arms and directed towards the outside of the framework and **in that** each arm is arranged with its extension perpendicular to the nearest face defined by the framework.

9. Framework in accordance with claim 1 **characterized in that** each arm ends with a flat wall (27) arranged transversely to the arm extension.

10. Framework in accordance with claim 1 **characterized in that** at least section members arranged at the base of the framework have arms perpendicular to said base and comprise at their ends projections (30) parallel to said base and identifying a support surface for a bottom panel.

11. Framework in accordance with claim 10 **characterized in that** the projections from the arms have their ends bent upwards in the shape of the letter L.

## Patentansprüche

1. Ein Rahmengestell (10) für einen Schaltschrank, insbesondere für Elektrogeräte, umfassend geschlossene Profilgehäuseteile (11), die durch Verbindungsstücke (12) miteinander verbunden sind, die Einsteckvorsprünge (13) in den entsprechenden Enden der Profilgehäuseteile besitzen, **dadurch gekennzeichnet, dass** die Profilgehäuseteile einen Schnitt mit zwei zueinander unter einem rechten Winkel angeordneten Armen (14) und einen mittigen Verbindungsteil (15) zwischen den beiden Armen besitzen, der gegenüber den Armen geneigt ist und zwei im wesentlichen parallele, gegenüberliegende Wände (15a, 15b) besitzt, dass die Einsteckvorsprünge (13) der Verbindungsstücke einen zum Innenschnitt des Profilgehäuseteils im wesentlichen komplementären Querschnitt zur Aufnahme in denselben mit einem Mindestmaß an Spiel besitzen, und dass Vorsprung und Profilgehäuseteil Bohrungen (18, 19, 20) haben, die gemäß einer zu den gegenüberliegenden Wänden des Profilgehäuseteils senkrechten Achse zum Durchgang einer Schraube (21) zur gegenseitigen Arretierung besitzen, wobei die Arretierschraube eine Wand durchdringt, um in einem Schraubglied (22) einzugreifen, das an der gegenüberliegenden Wand festliegt, um die Einsteckvorsprünge zwischen den beiden Wänden zu spannen.

2. Rahmengestell nach Anspruch 1, **dadurch gekennzeichnet, dass** die Wand (15a) der beiden gegenüberliegenden Wände, die in Richtung der durch die beiden Arme gebildeten Konkavität an ihren zwei Seiten in die Arme über Wandsegmente (16) übergeht, die zur Erstreckung der Arme selbst senkrecht angeordnet sind.

3. Rahmengestell nach Anspruch 1, **dadurch gekennzeichnet, dass** die beiden gegenüberliegenden Wände zu den Erstreckungen der Arme um 45° geneigt sind.

4. Rahmengestell nach Anspruch 1, **dadurch gekennzeichnet, dass** jeder Arm einen Endteil (17) besitzt, der sich in Richtung nach außen des Profils verdickt.

5. Rahmengestell nach Anspruch 1, **dadurch gekennzeichnet, dass** die Wand (15b) der zwei gegenüberliegenden Wände, die in Richtung der durch die beiden Arme gebildeten Konvexität, eine Vielzahl von Fenstern (23) besitzt, die längs der Erstreckung des Profilgehäuseteils ausgerichtet sind.

6. Rahmengestell nach Anspruch 1, **dadurch gekennzeichnet, dass** die zwei Arme eine Wand (25) haben, die zur durch die zwei Arme gebildeten Konvexität gerichtet ist und eine Vielzahl von Bohrungen (26) besitzt, die längs der Erstreckung des Profilgehäuseteils ausgerichtet sind.

7. Rahmengestell nach Anspruch 5, **dadurch gekennzeichnet, dass** eines der Fenster (23) eine Aufnahme für das Schraubglied (22) für die Arretierschraube herstellt, wobei das Schraubglied wie ein Dübel ausgeführt ist, der in diesem einen Fenster von außen des Profilgehäuseteils eingebracht ist, um ins Innere einer entsprechenden Ausnehmung (24) vorzuspringen, die im Einsteckvorsprung des entsprechenden Verbindungsteils vorhanden ist.

8. Rahmengestell nach Anspruch 1, **dadurch gekennzeichnet, dass** jedes Profilgehäuseteil eine Konkavität besitzt, die durch die zwei Arme festgelegt ist, und die nach außen des Rahmengestells gerichtet ist, und dass jeder Arm mit einer Erstreckung angeordnet ist, die zur am nächsten liegenden durch das Rahmengestell festgelegten Stirnseite senkrecht ist.

9. Rahmengestell nach Anspruch 1, **dadurch gekennzeichnet, dass** jeder Arm mit einer ebenen Wand (27) endet, die quer zur Erstreckung des Arms selbst angeordnet ist.

10. Rahmengestell nach Anspruch 1, **dadurch gekennzeichnet, dass** mindestens an der Basis des Rahmengestells angeordnete Profilelemente Arme besitzen, die zu dieser Basis senkrecht stehen, und an ihren Enden Vorsprünge (30) umfassen, die zu dieser Basis parallel sind und eine Auflagefläche für eine Grundtafel aufspannen.

11. Rahmengestell nach Anspruch 10, **dadurch gekennzeichnet, dass** die Vorsprünge aus den Armen ein nach oben gebogenes L-förmiges Ende besitzen.

## Revendications

1. Bâti (10) pour armoires métalliques, plus particulièrement destiné à recevoir des équipements électriques, comprenant des éléments profilés (11) creux reliés par des joints de liaison (12) dont les extrémités correspondantes sont pourvues de parties saillantes de mise en prise (13), les éléments profilés ayant une coupe transversale comportant deux branches (14) perpendiculaires l'une par rapport à l'autre, et une partie centrale (15) reliant les deux branches qui est inclinée par rapport aux branches et a des parois opposées (15a, 15b) sensiblement parallèles, les parties saillantes (13) des joints ayant une coupe transversale sensiblement complémentaire de la coupe transversale intérieure de l'élément profilé dans lequel elles sont logées avec un jeu minimum, **caractérisé en ce que** la partie saillante et l'élément profilé sont pourvus d'orifices (18, 19, 20) alignés selon un axe perpendiculaire auxdites parois opposées de l'élément profilé pour permettre le passage d'une vis de blocage auto-bloquante (21), la vis de blocage traversant une paroi pour se visser dans un élément fileté (22) solidaire de la paroi opposée pour que la partie saillante de mise en prise soit serrée entre les deux parois susmentionnées.

2. Bâti selon la revendication 1, **caractérisé en ce que** la paroi (15a) des deux parois opposées qui est orientée vers l'espace intérieur correspondant formé par les deux branches est reliée des deux côtés aux branches par des segments de paroi (16) disposés perpendiculairement au prolongement desdites branches.

3. Bâti selon la revendication 1, **caractérisé en ce que** lesdites deux parois opposées sont inclinées à 45° par rapport au prolongement des branches.

4. Bâti selon la revendication 1, **caractérisé en ce que** l'extrémité (17) de chaque branche s'évase vers l'extérieur du profilé.

5. Bâti selon la revendication 1, **caractérisé en ce que** la paroi (15b) des deux parois opposées qui est orientée vers la partie convexe formée par les deux branches est pourvue d'une pluralité de lumières 23 alignées suivant le prolongement de l'élément profilé.

6. Bâti selon la revendication 1, **caractérisé en ce que** les deux branches comportent une paroi (25) orientée vers la partie convexe formée par les deux branches et ayant une pluralité d'orifices (26) alignés suivant le prolongement de l'élément profilé.

7. Bâti selon la revendication 5, **caractérisé en ce que** l'une desdites lumières (23) fournit un siège audit élément fileté (22) pour la vis bloquante, l'élément fileté servant de cheville étant introduit à force dans ladite lumière depuis l'extérieur de l'élément profilé pour faire saillie dans une fente (24) correspondante de la partie saillante de mise en prise du joint correspondant.

8. Bâti selon la revendication 1, **caractérisé en ce que** chaque élément profilé présente un espace intérieur correspondant défini par les deux branches et orienté vers l'extérieur du bâti, et **en ce que** chaque branche est disposée de façon que son prolongement soit perpendiculaire à la face la plus proche définie par le bâti.

9. Bâti selon la revendication 1, **caractérisé en ce que** chaque branche se termine par une paroi plate (27) disposée de manière transversale au prolongement de la branche.

10. Bâti selon la revendication 1, **caractérisé en ce qu'**au moins les branches des éléments profilés disposés à la base du bâti sont perpendiculaires à ladite base, et comprennent, à leurs extrémités, des parties saillantes (30) parallèles à ladite base et délimitant une surface pour supporter un panneau de fond.

11. Bâti selon la revendication 10, **caractérisé en ce que** les extrémités des parties saillantes des branches sont recourbées vers le haut en forme de lettre L.
